Europäisches Patentamt

**European Patent Office**

Office européen des brevets

(11) Numéro de publication: **0 264 321
B1**

## FASCICULE DE BREVET EUROPEEN

(45) Date de publication du fascicule du brevet:
**18.07.90**

(21) Numéro de dépôt: **87402149.6**

(22) Date de dépôt: **25.09.87**

(51) Int. Cl.⁵: **B60D 1/00,** G01S 13/88,
B62D 13/02

(54) Dispositif d'attelage extensible pour véhicules routiers.

(30) Priorité: **30.09.86 FR 8613602**

(43) Date de publication de la demande:
**20.04.88 Bulletin 88/16**

(45) Mention de la délivrance du brevet:
**18.07.90 Bulletin 90/29**

(84) Etats contractants désignés:
**AT BE CH DE ES FR GB GR IT LI LU NL SE**

(56) Documents cités:
**EP-A- 0 176 442
DE-A- 3 150 335
DE-A- 3 208 747
GB-A- 2 050 745
US-A- 3 606 387
US-A- 3 825 921
US-A- 3 924 257**

(73) Titulaire: **ASSOCIATION OUVRIERE DES
COMPAGNONS DU DEVOIR DU TOUR DE FRANCE
ATELIERS SAINTE-CATHERINE, Route de Rambouillet,
F-78680 Epône(FR)**

(72) Inventeur: **Patriarca, Yannick, 9 Chemin Rural du
Mantois, F-78126 Aulnay sur Mauldre(FR)**
Inventeur: **Liger, Michel, 13 Villa Artois,
F-78410 Aubergenville(FR)**
Inventeur: **Deschamp, Roger, 22 rue de la Côte,
F-92500 Ruell Malmaison(FR)**

(74) Mandataire: **Schrimpf, Robert et al, Cabinet
Regimbeau 26, Avenue Kléber, F-75116 Paris(FR)**

# Description

La présente invention concerne un attelage pour véhicules routiers, permettant un état rapproché entre les véhicules lorsque ceux-ci sont sensiblement dans le prolongement l'un de l'autre, et un état éloigné dans des positions relatives pour lesquelles un intervalle plus grand s'avère nécessaire.

Il existe déjà de nombreux types d'attelages extensibles, concernant essentiellement une flèche de longueur variable pour l'attelage d'une remorque à un véhicule tracteur.

La plupart des systèmes connus utilisent le principe d'un allongement de la flèche lorsque l'angle de braquage entre les deux véhicules dépasse un certain seuil, cet allongement étant déclenché de la cabine au moyen d'un vérin, ou encore avec des moyens mécaniques et/ou électriques commandés automatiquement en fonction de la valeur de l'angle de braquage.

Cet état de la technique peut être illustré par la demande de brevet allemand N° 3 150 335 illustrant une flèche à longueur variable constituée par un vérin hydraulique à double effet dont la tige est reliée au moyen d'accrochage réalisant l'attelage d'un deuxième véhicule (remorque) à un premier véhicule (véhicule tracteur), et dont le corps est ainsi relié à la structure dudit deuxième véhicule. Le dispositif décrit utilise un circuit hydraulique comportant des canalisations reliées à chacune des chambres du vérin à double effet et des organes de commande permettant de déplacer le piston dudit vérin. Ce dispositif correspondant au préambule de la revendication 1, est intéressant par la simplicité et la fiabilité de sa structure, mais il présente l'inconvénient d'une commande extérieure manuelle (à l'arrêt) ou de la cabine, sans indication sur la position relative des deux véhicules : dans la pratique, le manoeuvre n'est faite qu'à l'arrêt, en raison du danger qu'il y a à modifier le longueur de la flèche en mouvement sur le seul examen visuel des conditions de route.

Pour les commandes automatiques, on peut citer le brevet français N° 2 533 172 (variation par coulissement d'un galet dans une came transversale de profil adapté), ainsi que la demande de brevet européen N° 0 033 873 et la demande de brevet allemand N° 31 47 543 (bielle reliée à la couronne de l'avant-train). Il est intéressant de citer également le brevet américain N° 3 606 387, bien que concernant l'attelage d'un équipement agricole : l'allongement du vérin hydraulique à double effet est déclenché par un contact électrique produit par une butée mécanique latérale entre les structures en présence.

D'autres systèmes plus élaborés ont été récemment développés, visant à tenir compte avec une meilleure précision, des positions relatives entre un véhicule tracteur et une remorque à avant-train, en particulier pour des creux et bosses de la route (variations angulaires dans un plan sensiblement vertical). Un exemple typique est illustré dans la demande de brevet français N° 2 570 654.

Le dispositif décrit dans le document précité utilise un capteur mécanique articulé inférieurement sur la remorque, et dont la partie supérieure forme un élément en T s'appuyant sur la face arrière du véhicule tracteur. Il est prévu un circuit hydraulique raccordé à une chambre annulaire délimitée par le cylindre et la tige de piston d'un vérin, et un circuit pneumatique raccordé à une chambre annulaire entourant la précédente, qui est délimitée par le cylindre et un tube extérieur et communique avec l'extrémité postérieure du cylindre.

Ce dispositif présente des inconvénients de plusieurs types. D'abord, la présence du capteur mécanique entre les deux véhicules est un désavantage, (tant par son volume que par la vulnérabilité de sa structure). Ensuite, la conception du mécanisme de vérin implique une structure coûteuse si on veut disposer d'un ensemble robuste et de fiabilité acceptable. Enfin, la structure d'ensemble entraîne plusieurs limitations pour son application, tant en ce qui concerne les types de véhicules concernés que pour la variété des situations d'utilisation.

L'état de la technique est également illustré par le brevet américain N° 3 924 257. Ce document décrit un système de détection à distance avec émetteur-récepteur, permettant d'assister le conducteur lors des manoeuvres en marche arrière : un émetteur est fixé à l'arrière du véhicule tracteur, tandis que le récepteur associé est disposé en avant de la remorque, de sorte que le conducteur peut recevoir des informations sur l'angle d'inclinaison de la remorque. Il convient de noter que ce système est associé à un attelage non extensible, la distance d'accrochage entre véhicule tracteur et remorque restant constante. Ce système est à rapprocher de celui qui est décrit dans le brevet américain N° 3 825 921, lequel permet une lecture directe de l'angle d'inclinaison entre remorque et véhicule tracteur.

Il convient enfin de mentionner d'autres applications particulières de systèmes à émetteur-récepteur ou analogues. Par exemple, la demande de brevet allemand N° 32 08 747 décrit une application particulière d'un système à émetteur-récepteur selon laquelle on mesure directement la distance verticale entre des éléments d'un chariot élévateur. On peut également citer la demande de brevet anglais N° 2 050 745, décrivant l'utilisation d'un radar pour faciliter les manoeuvres de parking dans un garage.

L'invention a pour objet de proposer un dispositif d'attelage plus performant que les dispositifs précités, dont la structure reste simple et dont la fiabilité d'utilisation soit élevée.

Un autre objet de l'invention est de proposer un dispositif s'adaptant à des types de véhicules très divers, en particulier aux semi-remorques.

Un autre objet de l'invention est de proposer un dispositif permettant des manoeuvres à quai pouvant faciliter notablement les opérations de chargement et de déchargement, en particulier en réduisant à zéro l'intervalle séparant une remorque de son véhicule tracteur.

Il s'agit plus particulièrement d'un dispositif d'attelage extensible pour véhicules routiers, comportant un vérin hydraulique à double effet, dont la tige est reliée au moyen d'accrochage réalisant l'attelage d'un deuxième véhicule à un premier véhicule, en particulier à un véhicule tracteur, et dont le corps est relié à la structure dudit deuxième véhicule, ainsi qu'un circuit hydraulique comportant des canalisations reliées à chacune des chambres du vérin à double effet et des organes de commande permettant de déplacer le piston dudit vérin et de faire ainsi varier la distance séparant les deux véhicules, caractérisé par le fait qu'il comporte des moyens de détection à distance capables d'émettre un signal témoignant de la position relative entre les deux véhicules à l'aide d'une cible portée par l'un desdits véhicules, ainsi qu'une unité centrale de commande reliée auxdits moyens de détection à distance et auxdits organes de commande du circuit hydraulique pour déclencher automatiquement l'allongement ou la rétraction du vérin à double effet en fonction de la position relative des véhicules, ledit circuit hydraulique comportant également des moyens de commande de sécurité déclenchant l'allongement dudit vérin en cas de panne totale ou partielle grâce à un accumulateur hydropneumatique.

De préférence, les moyens de détection à distance comportent un ensemble émetteur-récepteur monté sur le premier véhicule en arrière de celui-ci, et une cible montée sur le deuxième véhicule en avant de celui-ci, ledit émetteur-récepteur formant un mini-faisceau hertzien ou infra-rouge dirigé vers ladite cible. L'utilisation d'une technique radar est a priori plus intéressante qu'un système à cellule photoélectrique, plus vulnérable aux éléments extérieurs ou à une détérioration. En particulier, l'unité centrale de commande permet de déclencher automatiquement l'allongement du vérin à double effet lorsque la cible sort du mini-faisceau hertzien ou infra-rouge, en comparant le signal émis à un seuil prédéterminé. De préférence, l'unité centrale de commande comporte un moyen de temporisation agissant sur les moyens de commande de sécurité, de façon à déclencher automatiquement l'allongement du vérin à double effet si cet allongement ne s'est pas produit dans un bref intervalle de temps suivant le moment où le seuil prédéterminé a été atteint.

Pour tenir compte des différents types de véhicules utilisés, il est avantageux de prévoir que le dispositif comporte des moyens de détection à distance pour chaque articulation des véhicules attelés.

Lorsque le premier véhicule est un véhicule tracteur et le deuxième véhicule une remorque à essieux centraux, il est avantageux que le dispositif comporte un système unique à émetteur-récepteur et cible pour déclencher l'allongement ou la rétraction du vérin à double effet dont le corps est fixé dans une flèche solidaire du châssis de la remorque.

Lorsque le premier véhicule est un véhicule tracteur et le deuxième véhicule une remorque à avant-train articulé, il est avantageux que le dispositif comporte un double système à émetteur-récepteur et cible, entre le véhicule tracteur et l'avant-train d'une part et entre l'avant-train et le châssis de la remorque d'autre part, pour déclencher l'allongement ou la rétraction du vérin à double effet dont le corps est fixé dans une flèche triangulée reliée à l'avant-train articulé ; en particulier, la tige du vérin à double effet est reliée à un tube de glissière coulissant dans la flèche triangulée, et dont l'avant porte un anneau d'attelage conventionnel. De préférence, le double système émetteur-récepteur et cible est relié à l'unité centrale de commande de telle façon que le déclenchement de l'allongement ou de la rétraction puisse être séquentiel.

Lorsque le premier véhicule est un véhicule tracteur et le deuxième véhicule une semi-remorque, il est avantageux que le dispositif comporte un système unique à émetteur-récepteur et cible pour déclencher l'allongement ou la rétraction du vérin à double effet dont le corps est relié au châssis de la semi-remorque, et dont la tige est articulée sur un chariot coulissant portant la cheville d'attelage. Lorsqu'une remorque à avant-train à sellette est attelée à un véhicule tracteur à semi-remorque, le dispositif peut être encore plus élaboré : il comporte un triple système à émetteur-récepteur et cible, dont l'un constitue ledit système unique associé au vérin à double effet reliant le véhicule tracteur à la semi-remorque, et dont les deux autres constituent le double système associé au vérin à double effet reliant la semi-remorque à l'avant-train de la remorque.

Selon une conception particulièrement avantageuse lorsqu'on utilise une remorque, le vérin à double effet monté dans la flèche triangulée a deux positions de rétraction, la première étant déclenchée automatiquement grâce aux moyens de détection et correspondant à un intervalle minimum donné entre les véhicules, par exemple 100 mm, la seconde étant déclenchée à l'arrêt par des moyens interrupteurs associés et correspondant à un intervalle nul entre les véhicules de façon à former un ensemble continu de chargement ou déchargement.

De préférence, les organes de commande comportent deux ensembles d'électro-valves connectant l'une ou l'autre des chambres du vérin à double effet soit avec pompe hydraulique soit avec un réservoir de fluide hydraulique ; en variante, les organes de commande comportent un électro-distributeur et une électro-valve connectant une chambre du vérin à double effet soit avec une pompe hydraulique soit avec un réservoir de fluide hydraulique, l'autre chambre étant quant à elle seulement raccordée à l'accumulateur hydropneumatique de sécurité. Il est de toute façon intéressant que la pompe hydraulique soit actionnée par une prise de mouvement du moteur ou de la boîte de vitesses, par l'intermédiaire d'un embrayage commandé par l'unité centrale de commande.

En variante, les organes de commande comportent une première électro-valve, et un ensemble de deux électro-valves avec un étrangleur fluidique, connectant une chambre du vérin à double effet soit avec une pompe hydraulique soit avec un réservoir de fluide hydraulique, l'autre chambre étant quant à elle seulement raccordée à l'accumulateur hydropneumatique de sécurité ; en particulier, les deux électro-valves,auxquelles est associé l'étrangleur fluidique, sont montées en parallèle, et actionnées séquentiellement par l'unité centrale de commande lors du déclenchement de l'allongement du vérin à double effet, de façon à maîtriser l'accélération du fluide résultant de la poussée permanente de l'accumulateur hydropneumatique.

Il est également avantageux de prévoir des capteurs pour détecter l'état d'allongement ou de rétraction du vérin à double effet, lesdits capteurs étant reliés à l'unité centrale de commande.

D'autres caractéristiques et avantages de l'invention apparaîtront plus clairement à la lumière de la description qui va suivre et des dessins annexés, concernant des modes de réalisation préférentiels, en référence aux figures, où :

- les figures 1 à 4 illustrent des dispositifs d'attelage extensibles conformes à l'invention,intégrés à des groupes de véhicules très divers, à savoir respectivement une remorque attelée à deux essieux centraux, un véhicule à semi-remorque, une remorque attelée à avant-train, et une remorque à avant-train à sellette attelée à une semi-remorque,
- les figures 5a et 5b illustrent un ensemble à remorque à essieux centraux, respectivement au passage d'un creux et d'un virage, dont la cible sort du mini-faisceau hertzien de l'émetteur-récepteur, ce qui déclenche automatiquement l'allongement de l'attelage conformément à l'invention,
- les figures 6a et 6b illustrent le même principe que dans les figures précédentes, respectivement en creux et en virage, mais avec une semi-remorque,
- les figures 7 à 9 illustrent les ensembles des figures 1, 3, 4 dont la remorque est à un intervalle nul du véhicule tracteur, position de rétraction maximale pouvant être obtenue à l'arrêt avec le dispositif d'attelage de l'invention,
- la figure 10 est une vue de dessus partielle de la structure d'un dispositif d'attelage conforme à l'invention, appliqué à une semi-remorque,
- la figure 11 est une vue de dessus partielle d'une autre structure d'un dispositif d'attelage conforme à l'invention, appliquée à une remorque attelée,
- la figure 12 est une vue en perspective illustrant une structure préférée des moyens de détection à distance, avec cornets émetteur-récepteur et cible associée,
- la figure 13 est un schéma du circuit de fonctionnement du dispositif de l'invention,
- la figure 14 est un schéma d'une variante du circuit précédent, et
- la figure 15 est un schéma d'une variante du circuit de la figure 14 améliorant la sécurité et le confort lors d'un allongement de l'attelage.

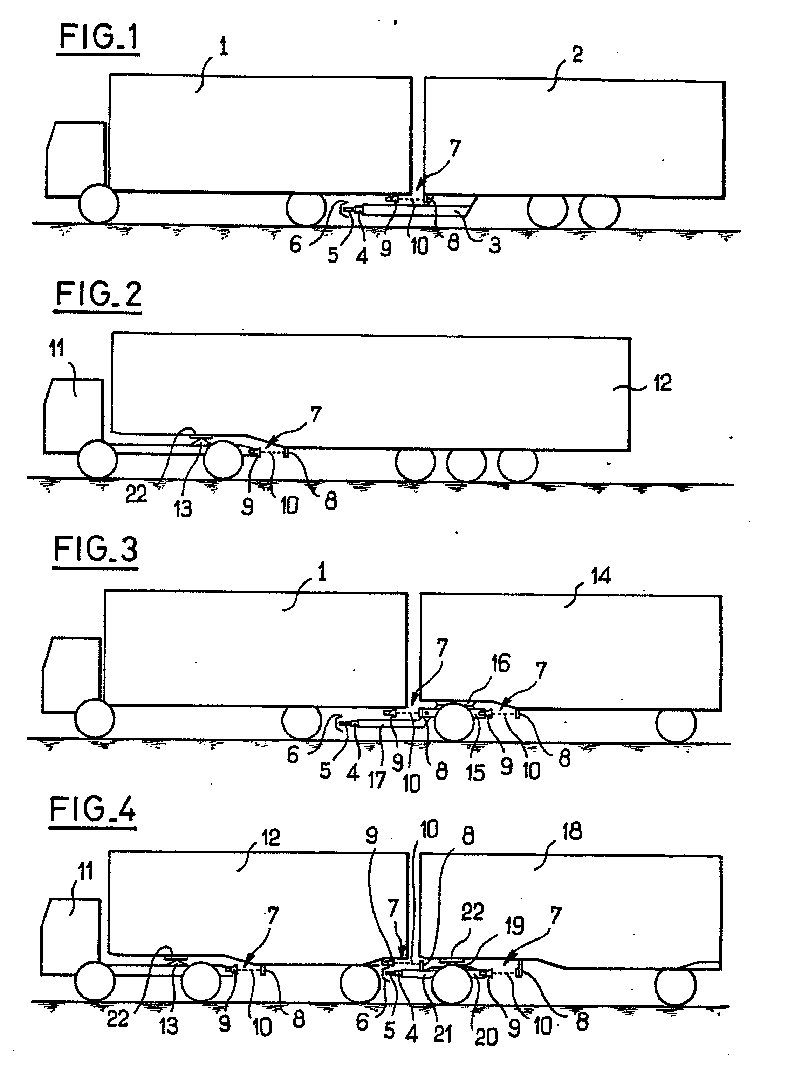

Les figures 1 à 4 illustrent schématiquement des dispositifs d'attelage extensible conformes à l'invention ; la structure précise de ce dispositif sera décrite en détail par la suite, mais il est important de comprendre le principe général d'un attelage extensible dont l'allongement ou la rétraction sera déclenché automatiquement au moyen d'organes de détection à distance capables d'émettre un signal témoignant de la position relative entre deux véhicules.

Sur la figure 1, on distingue un véhicule tracteur 1 auquel est attelée une remorque à essieux centraux 2. La remorque 2 comporte une flèche 3 solidaire du châssis de la remorque, et dans laquelle est disposé un vérin hydraulique à double effet qu'on ne distingue pas ici ; on ne voit que l'extrémité d'une glissière 4 solidaire de la tige dudit vérin et au bout de laquelle est prévu un anneau d'accrochage 5 de type classique reçu dans un crochet d'attelage 6 du véhicule tracteur.

Conformément à un aspect essentiel de la présente invention, des moyens de détection à distance 7 sont prévus, lesdits moyens étant capables d'émettre un signal témoignant de la position relative entre le véhicule tracteur 1 et la remorque attelée 2, à l'aide d'une cible 8 portée par ladite remorque. Ces moyens de détection à distance peuvent être naturellement de plusieurs types, mais, en tout état de cause, ils ne comporteront aucun élément mécanique monté sur l'un des véhicules et en appui sur l'autre véhicule. Sur la vue schématique de la figure 1, on a représenté un organe 9 qui peut être un émetteur-récepteur formant un mini-faisceau hertzien ou infra-rouge dirigé vers la cible 8, ledit faisceau étant schématisé ici par une ligne pointillée 10. Lorsque le véhicule 1 et la remorque 2 qui lui est attelée sont sensiblement dans le prolongement l'un de l'autre, la cible 8 se trouve au moins en partie dans le mini-faisceau hertzien ou infra-rouge formé par l'émetteur-récepteur 9 ; le signal émis par les moyens de détection à distance et traités par une unité centrale de commande agissant sur des organes de commande d'un circuit hydraulique pour que le vérin à double effet de l'attelage soit en position rétractée. Ainsi que cela sera illustré plus loin, un passage de l'ensemble routier en virage, en creux, ou en bosse, aura pour effet de faire sortir la cible 8 du mini-faisceau hertzien ou infra-rouge, et de déclencher alors automatiquement l'allongement du vérin à double effet. De même, dès que les deux véhicules reviendront en position relative sensiblement alignée, il sera procédé automatiquement à une rétraction dudit vérin.

En figure 2, il s'agit d'un ensemble à semi-remorque, avec un véhicule tracteur 11 auquel est attelée une semi-remorque 12 au niveau d'une sellette 13. Ainsi que cela sera décrit en détail plus loin, le mode de liaison de la semi-remorque 12 au niveau de la sellette 13 comporte un vérin hydraulique à double effet permettant de modifier l'intervalle entre la cabine du véhicule tracteur et l'avant de ladite semi-remorque. On retrouve naturellement un système de détection à distance 7, avec un émetteur-récepteur 9 disposé à l'arrière du véhicule tracteur 11, et une cible 8 montée sur le châssis de la semi-remorque 12. Comme précédemment, une disposition sensiblement alignée du véhicule tracteur et de sa semi-remorque a pour effet que la cible 8 est au moins en partie disposée dans le mini-faisceau hertzien ou infra-rouge, et de faire ainsi en sorte que le vérin à double effet soit dans une position telle que l'intervalle entre le véhicule tracteur et la semi-remorque soit réduit, par exemple 100 mm. Dès que l'ensemble routier vient à aborder un virage, un creux, ou une bosse d'importance significative, le dispositif d'attelage de l'invention aura pour effet de reculer la semi-remorque 12 par rapport au véhicule tracteur 11, jusqu'à ce que ces deux véhicules reviennent en position relative sensiblement alignée.

Les disposition illustrées aux figures 1 et 2 comportaient une seule articulation, et un système unique de détection à distance 7 associé, en particulier avec un émetteur-récepteur 9 et une cible 8. Il est important de comprendre que le dispositif d'attelage extensible de l'invention peut également être utilisé avec des dispositions comportant plusieurs articulations, ainsi que cela a été représenté aux figures 3 et 4.

En figure 3, on retrouve le véhicule tracteur 1 de la figure 1, mais la remorque 14 qui lui est attelée est une remorque à avant-train, c'est-à-dire comporte un essieu avant directeur. On distingue ainsi à l'avant de cette remorque un avant-train 15 articulé sur une couronne 16, et se prolongeant vers l'avant par une flèche triangulée 17, plus rigide que la flèche 3 illustrée en figure 1, avec une glissière 4 solidaire de la tige du vérin à double effet disposé dans ladite flèche, et l'anneau d'attelage 5. Il est alors avantageux de prévoir des moyens de détection à distance pour chaque articulation du véhicule attelé : on distingue ainsi un double système de moyens de détection à distance 7, entre le véhicule tracteur 1 et l'avant-train 15 d'une part, et entre l'avant-train 15 et le châssis de la remorque 14 d'autre part. Ce double système 7 à émetteur-récepteur 9 et cible 8 peut permettre un déclenchement séquentiel de l'allongement ou de la rétraction du vérin à double effet monté dans la flèche triangulée 17 : on peut aisément concevoir que, lorsque l'ensemble attelé aborde une courbe moyenne par exemple, les moyens de détection à distance 7 disposés en avant permettent le déclenchement d'un allongement partiel du vérin à double effet, les moyens de détection à distance disposés en arrière intervenant quant à eux dans le cas d'une courbe forte, et déclenchant alors un allongement maximum dudit vérin.

En figure 4, on a illustré un ensemble attelé combinant les dispositions précédentes, et présentant ainsi trois articulations. On distingue ainsi un véhicule tracteur 11 auquel est attelée une semi-remorque 12 (prévue dans ce cas en général plus courte que la semi-remorque 12 de la figure 2), puis un autre véhicule en remorque 18 du type remorque à avant-train à sellette (fréquemment dénommée "dolly"). La remorque 18 constitue ainsi en fait une petite semi-remorque montée sur la sellette 19 d'un avant-train 20 à l'avant duquel est montée une flèche triangulée 21 du même type que les flèches précédentes, recevant un vérin hydraulique à double effet. La référence 22, également reportée sur la figure 2, concerne le chariot coulissant pour un ancrage sur la sellette 13 du véhicule tracteur, et sur la sellette 19 de l'avant-train 20. Cette disposition à trois articulations implique ici la présence d'un triple système de moyens de détection à distance 7 : à l'avant, on retrouve le système unique de la figure 2 associé au vérin à double effet reliant le véhicule tracteur 11 et la semi-remorque 12, puis on trouve un double système associé au vérin à double effet reliant la semi-remorque 12 à l'avant-train 20 de la remorque 18, ledit double système étant analogue à cleui de la figure 3 bien qu'il s'agisse dans ce cas d'un ancrage sur sellette et non d'un montage en couronne. Dans la disposition de la figure 4, on pourra donc faire varier à la fois l'intervalle entre véhicule tracteur 11 et semi-remorque 12, et l'intervalle entre semi-remorque 12 et remorque 18. Là encore, les moyens de commande pourront être organisés de façon que l'allongement ou la rétraction des deux vérins à double effet en présence puisse être déclenché séquentiellement.

Il va de soi que les dispositions des moyens de détection à distance ont été ici illustrées à titre d'exemple préférentiel. On pourrait très bien par exemple, dans une autre variante, disposer la cible 8 non pas en avant d'un avant-train 15 ou 20, mais directement sur la remorque 14 ou 18.

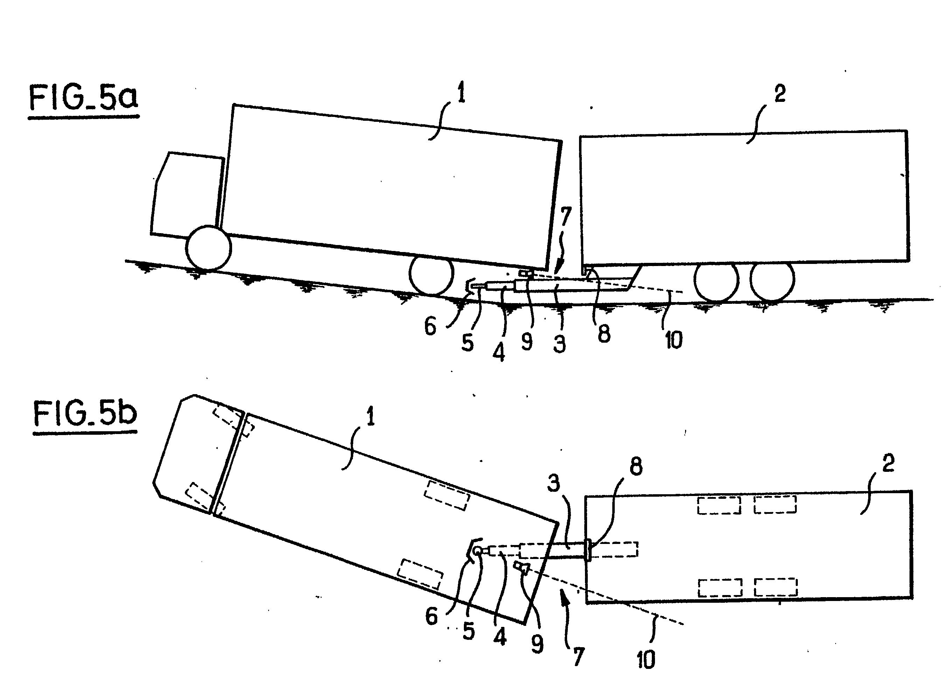

Les figures 5a et 5b illustrent un ensemble à remorque à essieux centraux du type de celui de la figure 1, respectivement au passage d'un creux (vue en plan), et d'un virage (vue de dessus). Sur la figure 5a, on constate que la cible 8 ne se trouve plus dans le champ du mini-faisceau hertzien ou infra-rouge symbolisé par la ligne 10 et émanant de l'ensemble émetteur-récepteur 9. Le vérin hydraulique à double effet disposé dans la flèche 3 doit impérativement s'allonger afin d'éviter tout contact au sommet du véhicule et de sa remorque. Il conviendra naturellement de prérégler l'unité centrale de commande recevant les informations du système émetteur-récepteur de telle façon que le seuil à partir duquel il s'agit de déclencher l'allongement du vérin corresponde dans la réalité à une pente donnée, par exemple 4 %. Il est naturellement possible de prévoir également un seuil d'alerte corre spondant à une pente plus faible, par exemple 2 %, ce qui permet d'obtenir une tolérance plus souple du système et d'absorber les fluctuations tant que le deuxième seuil n'est pas atteint. Sur la figure 5b, on observe un phénomène analogue lorsque l'ensemble routier aborde une courbe : une courbe droite ou gauche d'importance prédéterminée, correspondant à un angle donné entre le véhicule tracteur et sa remorque, déclenchera de la même façon un allongement automatique du vérin hydraulique à double effet disposé dans la flèche 3. Il va de soi que les variations réelles de position relative entre les deux véhicules pourront impliquer une variation simultanée de plusieurs paramètres angulaires : il suffit en fait de décider que l'allongement du vérin à double effet doit être déclenché dès que l'un de ces paramètres atteint une valeur prédéterminée.

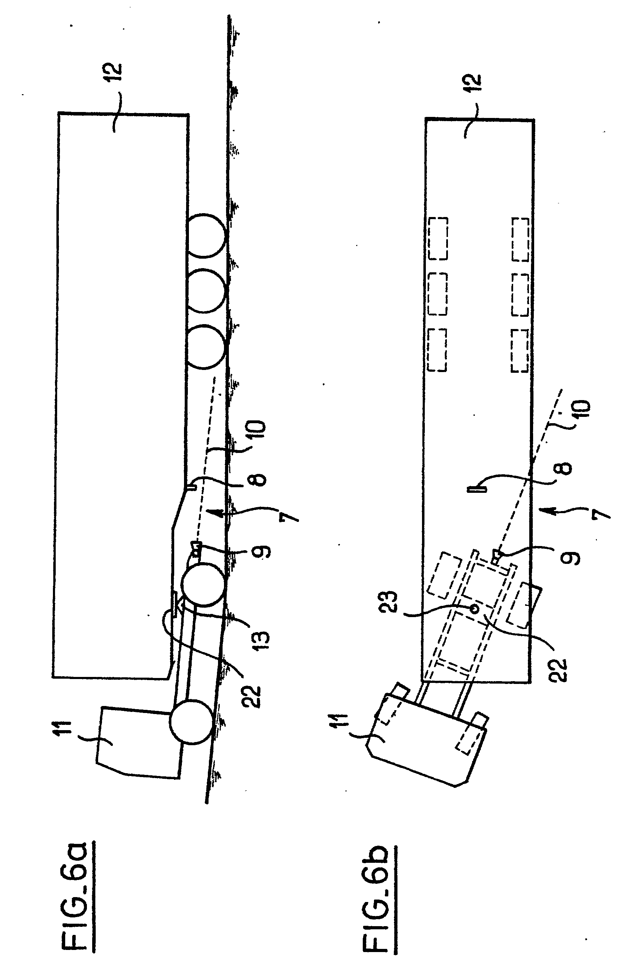

Les figures 6a et 6b illustrent de la même façon l'allongement du vérin à double effet faisant varier la position du point d'ancrage d'une semi-remorque 12 sur la sellette 13 de son véhicule tracteur 11. Figure 6a, l'ensemble routier aborde une pente montante dont l'importance est telle que la cible 8 sort du mini-faisceau hertzien ou infra-rouge symbolisé par la ligne 10, ce qui déclenche automatiquement l'allongement du vérin à double effet, et donc le déplacement du chariot coulissant 22 portant une cheville d'ancrage 23. La semi-remorque est alors automatiquement reculée par rapport au véhicule tracteur, ce qui supprime tout risque de contact entre les deux véhicules. Le raisonnement est identique lorsqu'il s'agit d'une courbe, ainsi qu'illustré en figure 6b, auquel cas le recul de la semi-remorque vise à écarter tout risque de contact entre les zones latérales concernées.

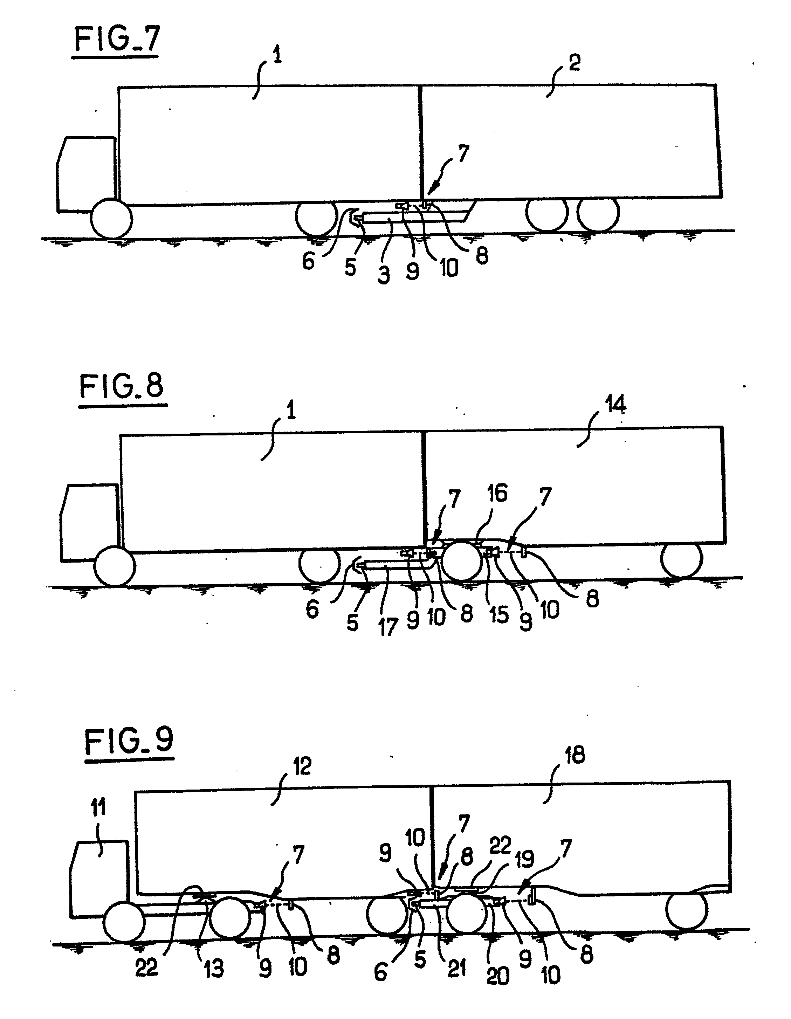

Parmi les différents avantages que présente l'adoption d'un système de détection à distance, par rapport aux systèmes à palpeurs mécaniques des dispositifs connus, il convient de citer la possibilité de réduire à zéro l'intervalle séparant un véhicule tracteur de la remorque qui lui est attelée. Cette possibilité est illustrée aux figures 7, 8 et 9, correspondant respectivement à une remorque à essieux centraux 2, une remorque à avant-train 14, et une remorque à avant-train à sellette 18, lesdites remorques ayant déjà été illustrées aux figures 1, 3, 4. Il va de soi que ce type de manoeuvre ne saurait être envisagé qu'à l'arrêt complet, de sorte que l'on prévoira plutôt une commande extérieure manuelle de façon que l'opérateur puisse surveiller le bon déroulement de l'opération. Avec cette disposition, le vérin à double effet monté dans la flèche triangulée ou non 3, 17, 21 aura deux positions de rétraction, la première étant déclenchée automatiquement grâce aux moyens de détection 7 et correspondant à un intervalle minimum donné entre les véhicules, par exemple 100 mm, la seconde étant déclenchée manuellement à l'arrêt par des moyens interrupteurs associés (non représentés ici) en vue d'un contact direct entre la remorque et son véhicule tracteur. Cette possibilité d'obtenir un intervalle nul entre les véhicules est extrêmement intéressante, car elle permet de constituer ainsi un ensemble continu facilitant considérablement les opérations de chargement ou de déchargement ; il sera naturellement prévu des organes de centrage (non représentés ici) au niveau des planchers des véhicules respectifs, de façon que lesdits planchers puissent constituer un plancher continu unique parfaitement plan.

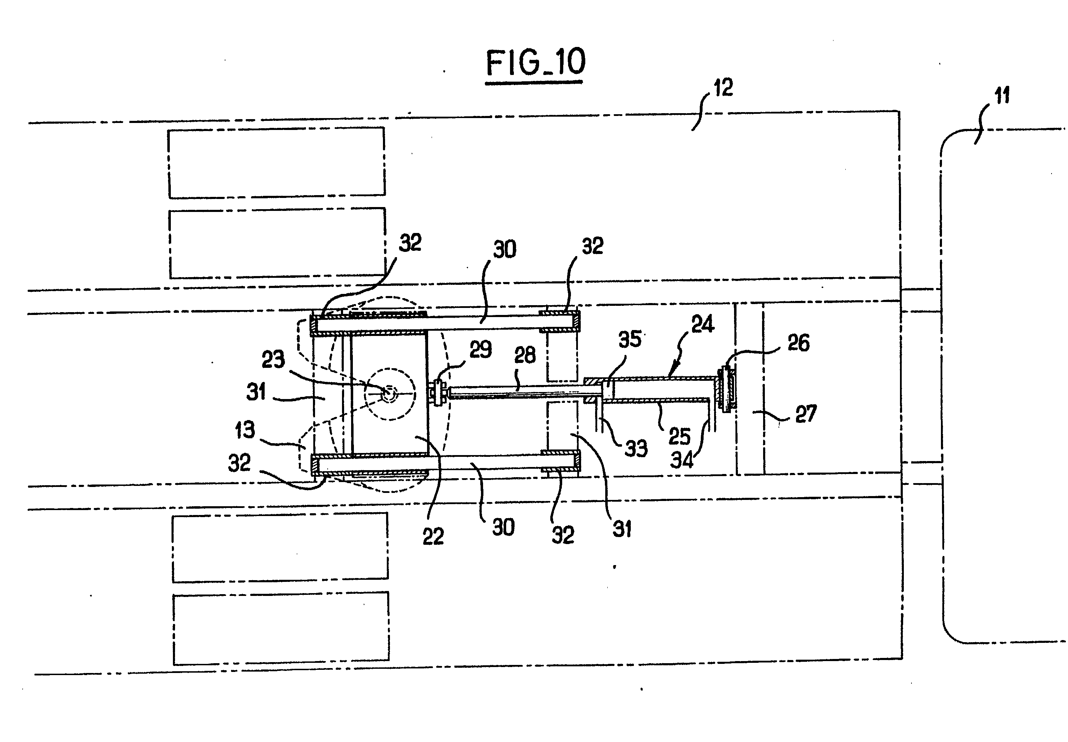

On se référera maintenant à la figure 10 qui est une vue de dessus partielle de la structure d'un dispositif d'attelage conforme à l'invention, appliqué à une semi-remorque. La cabine du véhicule tracteur 11 et la structure extérieure de la semi-remorque 12 ont été schématisées par des traits mixtes afin de situer la structure d'attelage. Afin de varier l'intervalle entre les deux véhicules, on utilise dans le cadre de la présente invention un vérin hydraulique à double effet 24 dont le corps 25 est relié, de préférence au moyen d'une art iculation 26, pour éviter un assemblage rigide, à une traverse 27 du châssis de la semi-remorque 12. La tige 28 du vérin est quant à elle reliée à un chariot coulissant 22 dont il a déjà été question plus haut, lequel chariot porte en sa face inférieure une cheville d'attelage conventionnelle 23 destinée à être reçue dans la sellette 13 du véhicule tracteur 11. Il est avantageusement prévu une liaison du type à rotule entre l'extrémité libre de la tige 28 et le chariot coulissant 22. Toujours dans le but d'éviter des efforts de flexion appliqués à la tige du vérin à double effet 24, il est également prévu de disposer un ensemble de guidage pour le coulissement longitudinal du chariot 22 : on distingue ainsi sur la figure 10 un ensemble de deux tiges de guidage 30, fixées par leurs extrémités sur deux traverses 31 du châssis de la semi-remorque au moyen de manchons 32 solidaires desdites traverses. Un tel montage flottant du vérin hydraulique à double effet 24, combiné au montage coulissant parfaitement guidé du chariot 22, permet audit vérin de fonctionner dans d'excellentes conditions. On a également schématisé l'arrivée de deux canalisations 33 et 34 permettant l'admission ou l'échappement du fluide hydraulique sous pression d'un côté ou de l'autre du piston 35. On comprendra aisément que la rétraction du vérin hydraulique à double effet 24 correspond à une augmentation de l'intervalle entre les deux véhicules et inversement (la position illustrée en figure 10 est une position d'extension maximale), ceci en raison du point fixe que représente la cheville d'ancrage 23 constituant la seule liaison entre les véhicules.

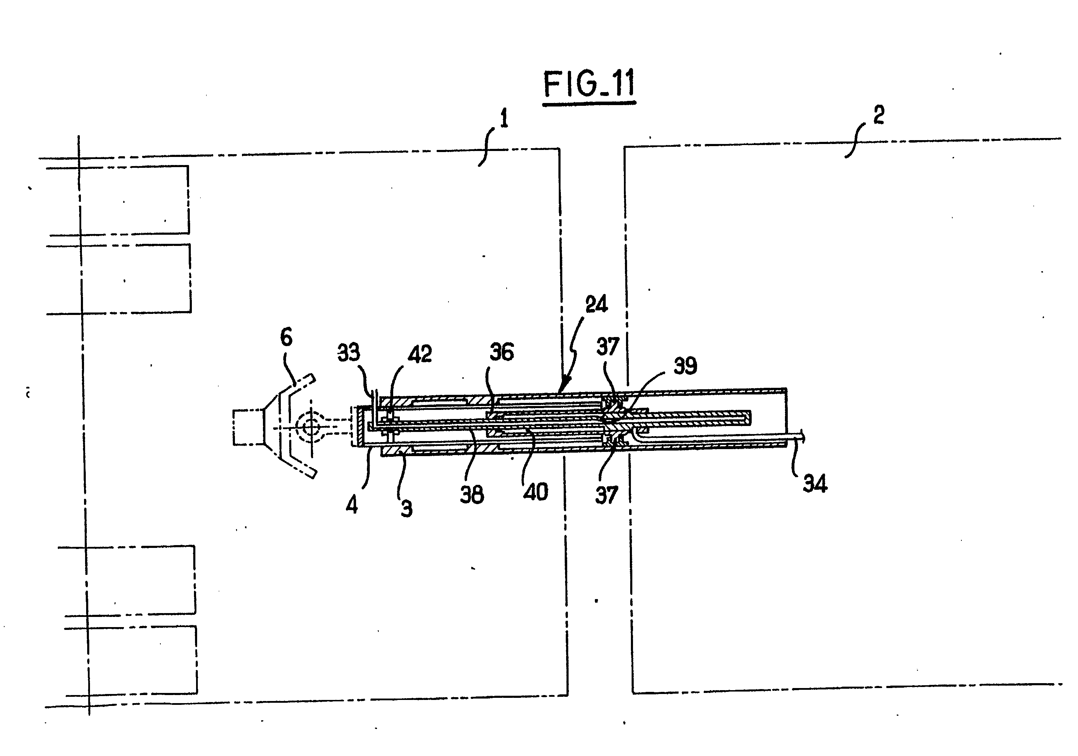

La figure 11 illustre de la même façon par une vue de dessus partielle une variante de la structure d'un dispositif d'attelage conforme à l'invention, appliquée à une remorque attelée. La structure est ici légèrement différente de la précédente du fait que le vérin à double effet 24 est logé dans l'extrémité avant de la flèche 3 (il va de soi que ce type de structure peut s'appliquer à tout type de remorque attelée, en particulier celles illustrées aux figures 3 et 4). On distingue ainsi le tube de glissière 4 coulissant dans la partie avant de la flèche d'attelage 3, et à l'intérieur duquel est logé le corps du vérin 36 qui est monté oscillant sur ladite flèche au moyen de deux tourillons 37. La tige du vérin hydraulique à double effet est ici une tige creuse 38 communiquant par un orifice 39 avec la chambre avant 40 dudit vérin ; l'autre chambre n'est pas visible sur la figure 11, car le piston 41 est représenté dans une position qui correspond à une rétraction maximale du vérin. De façon connue en soi, il est de préférence prévu un montage flottant, par exemple au moyen de rondelles élastiques, pour l'extrémité avant de la tige 38, au moyen d'une entretoise 42 disposée dans le tube de glissière 4.

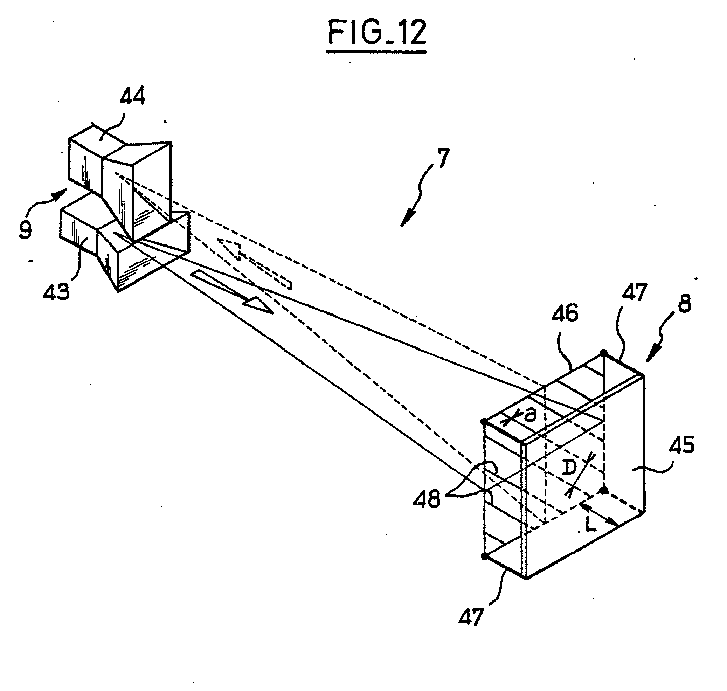

La figure 12 illustre un exemple de structure des moyens de détection à distance 7, lesdits moyens comportant un émetteur-récepteur 9 monté sur le premier véhicule en arrière de celui-ci, et une cible 8 montée sur le deuxième véhicule en avant de celui-ci, ledit émetteur-récepteur formant ici un mini-faisceau hertzien (ou encore infra-rouge) dirigé vers ladite cible. On pourrait naturellement envisager des moyens de détection à distance utilisant une cellule photoélectrique par exemple, ou tout autre dispositif équivalent; néanmoins, la technique radar offre de nombreux avantages pratiques, en particulier celui d'être insensible aux saletées ou obstacles divers interposés entre l'émetteur-récepteur et la cible.

On distingue ici un cornet émetteur 43 et un cornet récepteur 44, utilisant un principe de propagation des ondes électromagnétiques en polarisation croisée. Ceci permet d'identifier avec précision une partie déterminée de la cible, laquelle est essentiellement constituée par un réseau polariseur. La cible 8 comporte ainsi une plaquette support 45, sur laquelle est monté un réseau prédimensionné de fil métallique : un cadre 46, dont le plan est parallèle à celui de la plaquette support 45, est ainsi fixé au moyen d'entretoises 47 à une distance L de ladite plaquette. Le cadre 46 sert de support à une pluralité de fils métalliques 48, inclinés à 45°, avec une distance inter-fils notée D et un diamètre de fil noté a.

Pour une longueur d'onde λ donnée du mini-faisceau hertzien considéré, on a une relation simple liant les paramètres L, D, a, ce qui permet de choisir un dimensionnement de la cible optimal pour l'application considérée :

$$\frac{\lambda}{D} \times \frac{1}{Log \ (\frac{D}{\pi a})} = 2,05.$$

A titre indicatif, pour une fréquence de 10 GHz, on aura L = 10,17 mm, D = 14 mm, et a = 0,7 mm (avec neuf brins de fils utilisés pour former le cadre qui est maintenu à distance d'une plaquette support carrée de 100 mm x 100 mm).

Ces techniques sont bien connues des spécialistes du métier, de sorte qu'il est inutile de rentrer dans les détails de la structure de l'émetteur-récepteur 9. Il convient néanmoins de noter qu'il est préférable de travailler avec une fréquence suffisamment élevée, par exemple de l'ordre de 10 à 12 GHz., afin de combattre un phénomène d'atténuation défavorable lorsque ces moyens de détection à distance sont exposés à une grande humidité.

Il existe naturellement d'autres types d'émetteur-récepteur pouvant être utilisés dans le cadre de l'invention. On pourra en particulier se référer au brevet français N ° 2 278 212 décrivant un ensemble émetteur-récepteur à un seul cornet.

Il sera naturellement avantageux de protéger l'ensemble émetteur-récepteur 9 et la cible 8 dans un capot métallique ou en matière plastique, ce qui confère en outre à l'ensemble un caractère discret évitant d'attirer l'attention, sans nuire aucunement à son fonctionnement.

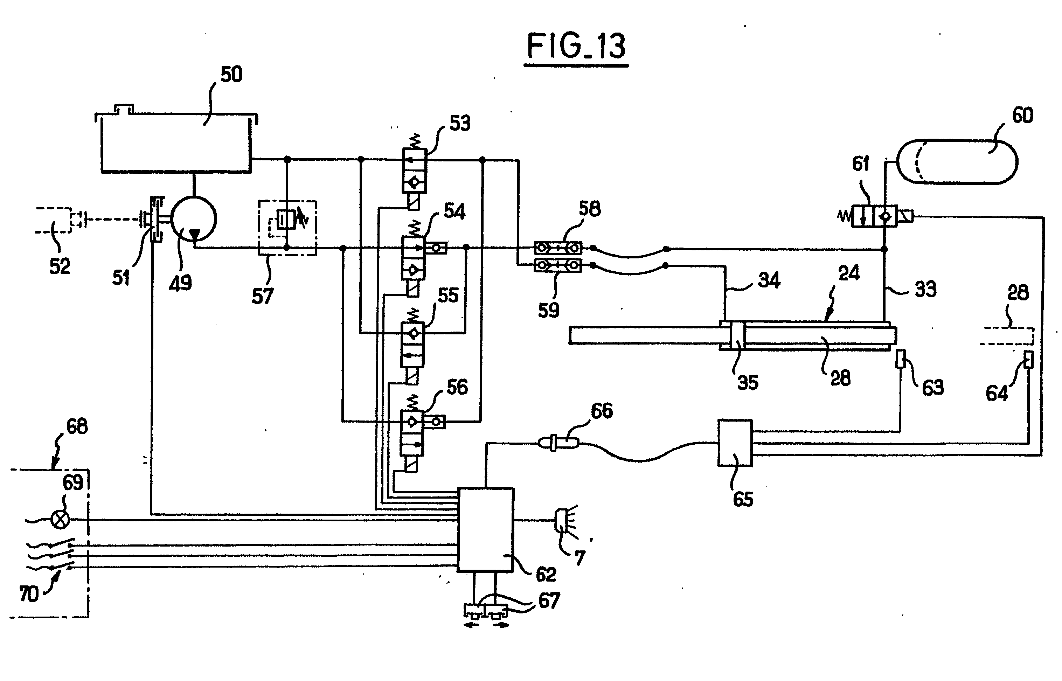

La figure 13 illustre un schéma possible du circuit de fonctionnement d'un dispositif conforme à l'invention.

Le vérin hydraulique à double effet 24 est illustré seul pour ne pas charger la figure, et on distingue sa tige 28 (ici en position d'extraction maximale), son piston 35, et les deux canalisations 33 et 34 permettant de mettre sous pression ou à l'échappement les chambres correspondantes situées de part et d'autre dudit piston. On distingue ainsi une pompe hydraulique 49 reliée à un réservoir hydraulique 50, et actionnée par l'intermédiaire d'un embrayage 51 sur une prise de mouvement schématisée en pointillés 52 ; cette prise de mouvement peut se faire sur la boîte de vitesses ou sur un arbre moteur, ou au moyen d'une roue indépendante, en évitant ainsi tout entraînement par prise sur un pneumatique du véhicule qui entraînerait inévitablement une usure défavorable. Ceci permet un actionnement de la pompe 49, en agissant sur l'embrayage 51, limité au seul fonctionnement actif de ladite pompe. Il est par ailleurs prévu des organes de commande classiques dans les systèmes hydrauliques de ce genre : des électro-valves à clapet 53 à 56, en aval desquelles est prévu un limiteur de pression 57, puis des coupleurs rapides hydrauliques 58, 59 de conception classique, pour un raccordement aux canalisations 33 et 34.

Il est également prévu des moyens de commande de sécurité déclenchant l'allongement du vérin en cas de panne totale ou partielle : ces moyens de commande sont ici représentés par un accumulateur hydropneumatique 60, relié à la canalisation 33 par l'intermédiaire d'une électro-valve 61. Ainsi, en cas de panne totale, ou en cas de mauvais fonctionnement, c'est-à-dire lorsque l'allongement ne se produit pas alors que l'instruction en a été donnée (par exemple après une courte durée qui peut être de l'ordre d'une seconde), l'électro-valve 61 permet de mettre la chambre du vérin qui déclenche l'extension de la tige, directement en communication avec ledit accumulateur hydropneumatique, qui est du type à vessie gonflable.

La position illustrée à la figure 13 est une position d'extension maximale. Si l'on veut procéder à une rétraction de la tige du vérin, l'embrayage 51 est enclenché, et la pompe 49 envoie du fluide hydraulique vers la canalisation 34 en passant par les limiteurs de pression 57, l'électro-valve 56, et le coupleur rapide 59. Parallèlement, l'échappement se fait par la canalisation 33, le coupleur rapide 58, l'électro-valve 55, et enfin le réservoir hydraulique 50.

Inversement, pour la commande d'allongement, la pompe 49 envoie du fluide hydraulique vers la canalisation 33, en passant par le limiteur de pression 57, l'électro-valve 54, et le coupleur rapide 58 ; l'échappement se fait quant à lui par la canalisation 34, le coupleur rapide 59, l'électro-valve 53, et enfin le réservoir hydraulique 50. Les informations provenant des moyens de détection à distance 7 sont traitées par une unité centrale de commande 62. Cette unité pourra comporter un relais temporisé, pour déclencher l'allongement si celui-ci ne s'est pas produit après une durée prédéterminée suivant l'instruction correspondante : il s'agit alors d'une sécurité automatique indispensable pour éviter tout risque d'accident. D'autres équipements complémentaires peuvent être prévus, certains d'entre eux ont été illustrés sur la figure 13.

On trouve en particulier des capteurs 63 et 64 permettant de détecter l'état d'extension de la tige du vérin 24. Les capteurs 63 et 64 sont reliés à l'unité centrale de commande 62, par l'intermédiaire d'une boîte de dérivation 65 et d'un coupleur électrique 66, ce qui permet de piloter convenablement les électro-valves 53 à 56.

On notera également la présence d'interrupteurs manuels extérieurs 67, reliés à l'unité centrale de commande 62, et permettant d'allonger ou de rétracter le vérin hydraulique à double effet 24 lors d'une manoeuvre à quai. C'est en particulier au moyen de tels interrupteurs qu'un opérateur peut procéder à un rapprochement total entre les deux véhicules, pour une position dans laquelle l'intervalle nul entre lesdits véhicules permet de constituer un ensemble continu de chargement ou de déchargement. Le cadre pointillé 68 schématise le tableau de bord, sur lequel on trouve de préférence un témoin lumineux 69 permettant d'indiquer au conducteur que le vérin est en cours d'extension ou en état d'extension maximum (lorsque les moyens de commande de sécurité sont enclenchés, le témoin reste allumé, même en position alignée des véhicules, ce qui permet d'alerter le conducteur de la présence d'une situation anormale). On trouve également une série de prises d'informations par des connecteurs 70 reliés à l'unité centrale de commande 62, pour les freins de parquage, les freins habituels, et l'enclenchement d'une vitesse.

Il va de soi que d'autres circuits de commande hydrauliques peuvent être adoptés sans sortir du cadre de la présente invention.

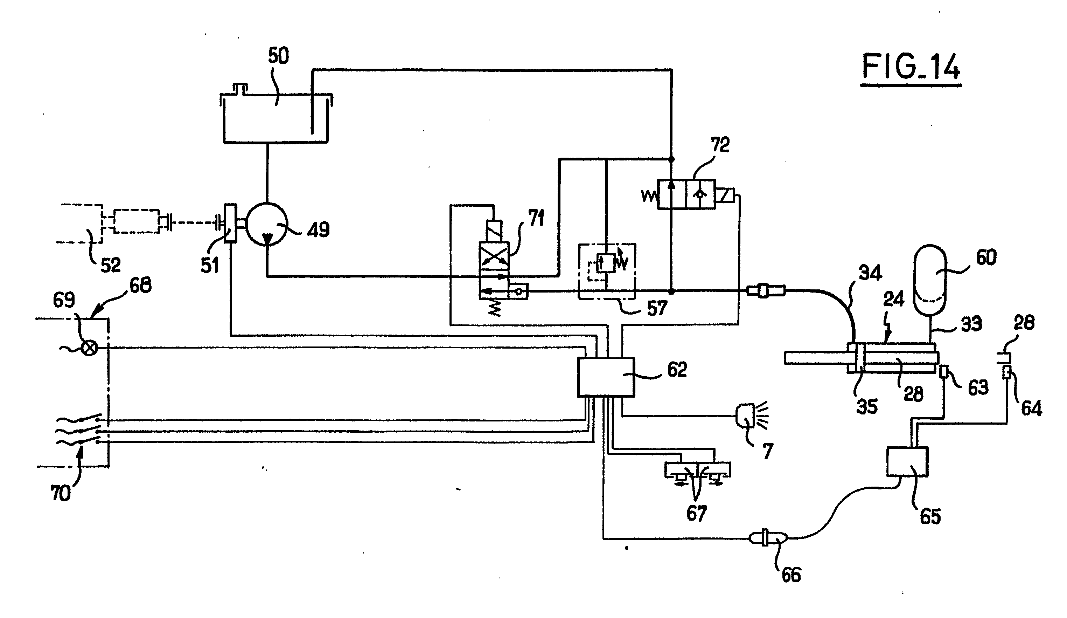

La figure 14 illustre ainsi une variante possible, dans laquelle on utilise un électro-distributeur 71 et une électro-valve à clapet 72 ; on notera qu'un limiteur de pression 57 est également prévu, mais il est monté ici en aval de l'électro-distributeur 71. Dans cette variante, la pompe 49 n'est reliée qu'à une seule chambre du vérin hydraulique à double effet 24, pour commander la rétraction dudit vérin, l'autre chambre étant quant à elle reliée en permanence à un accumulateur hydropneumatique 60. Avec un tel circuit, le déclenchement de la rétraction se fait en envoyant du fluide hydraulique sous pression par l'intermédiaire de la pompe 49 actionnée par l'embrayage 51, le fluide passant par l'électro-distributeur 71, le limiteur de pression 57, et arrivant ainsi à la canalisation 34. Simultanément, la décharge se fait directement par la canalisation 33 dans l'accumulateur hydropneumatique 60. Inversement, la commande de l'allongement se fait par l'action de l'accumulateur hydropneumatique 60, l'échappement hydraulique se faisant alors par la canalisation 34, l'électro-valve 72, et enfin le réservoir hydraulique 50. Cette variante de circuit est plutôt plus simple que la précédente, mais offre moins de possibilités de contrôle : il est en effet intéressant de procéder aux opérations normales, par commande automatique ou manuelle, au moyen de la pompe hydraulique, et de conserver ainsi l'utilisation d'un circuit spécial comme moyen de commande de sécurité.

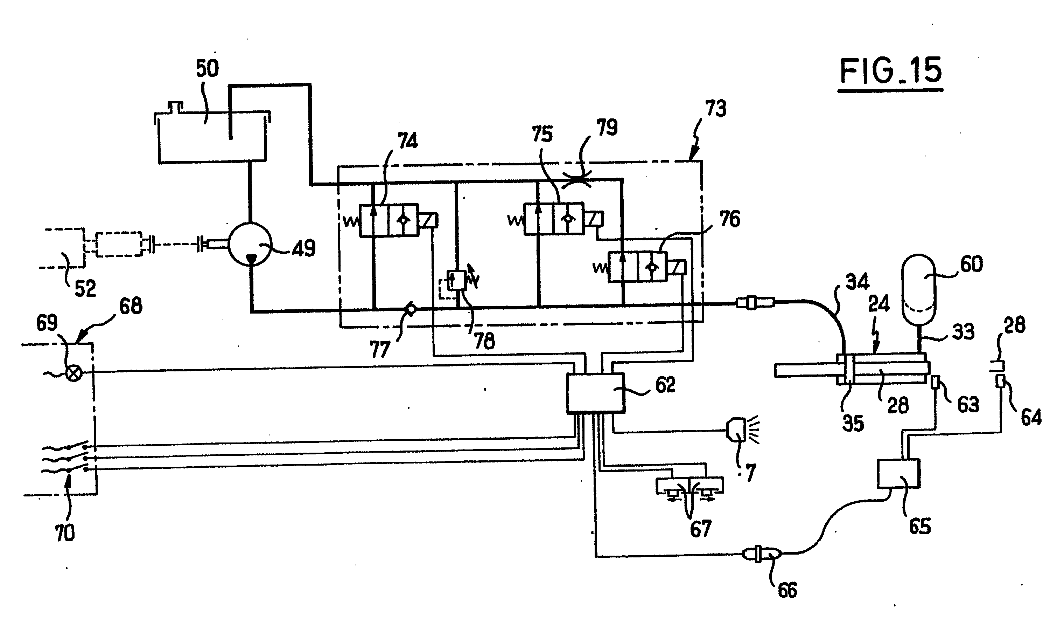

La figure 15 illustre une variante possible du circuit de la figure 14, visant en particulier à améliorer la sécurité et le confort lors d'un allongement de l'attelage.

Dans le cadre de cette variante, l'embrayage 51 du circuit précédent est supprimé, de sorte que la pompe 49 fonctionne en permanence. Le nouveau bloc de distribution est ici représenté par le bloc 73 indiqué en traits mixtes.

Pour la commande de rétraction, l'électro-distributeur 71 de la figure 14 est remplacé par une électro-valve à clapet 74, et, pour la commande d'allongement, l'électro-valve 72 de la figure 14 est remplacée par un ensemble comportant deux électro-valves à clapet 75, 76 montées en parallèle et un étrangleur fixe (gicleur) 79. Le nouveau circuit comporte enfin des moyens classiques de sécurité, à savoir un clapet anti-retour 77 et un limiteur de pression 78 en aval dudit clapet.

Cet ensemble à deux électro-valves, pour lesquelles l'unité centrale 62 peut réaliser une commande séquentielle, permet de "casser" l'accélération du fluide vers le réservoir au déclenchement de l'allongement, ce qui permet d'améliorer la sécurité et le confort de conduite lors de cette opération.

On va brièvement décrire le fonctionnement de ce circuit, sachant que les électro-valves à clapet 74, 75, 76 concernées sont ouvertes en position de repos.

Lorsque l'attelage est en position d'allongement, les trois électro-valves à clapet sont non-alimentées (position illustrée à la figure 15), et le fluide hydraulique retourne directement au réservoir 50. En cas de commande de rétraction, les trois électro-valves sont excitées, de sorte que le fluide hydraulique parvient au vérin 24 (avec une dérivation possible par le limiteur 78 en cas de surpression) ; dès que le capteur 64 indique que la position de rétraction maximale est atteinte, l'alimentation électrique de l'électro-valve 74 est coupée (les deux autres restant excitées) : c'est la position correspondant au roulement en ligne droite.

A partir de cette position, en cas de commande d'allongement, l'alimentation électrique des électro-valves 76 et 75 est coupée séquentiellement : l'ouverture de la seule électro-valve 76 envoie une première quantité de fluide hydraulique vers le gicleur 79, ce qui permet d'encaisser l'à-coup correspondant ; ensuite (par exemple de un à trois dixièmes de seconde après), l'électro-valve 75 est à son tour ouverte, ce qui permet d'avoir une augmentation progressive du débit de fluide hydraulique, jusqu'au débit total souhaité.

On parvient ainsi à maîtriser très rapidement l'accélération du fluide (résultant de la poussée permanente de l'accumulateur 60) : ceci se fait en deux à quatre dixièmes de seconde seulement, ce qui reste très faible par rapport aux quatre secondes correspondant en moyenne au temps total requis pour l'allongement total du vérin.

Il en résulte un fonctionnement plus fiable, et une conduite plus sûre et plus confortable. De plus, le montage du bloc modulaire est très aisé, grâce à la présence de trois branchements seulement.

Il va de soi que l'invention n'est nullement limitée aux modes de réalisation qui viennent d'être décrits.

## Revendications

1. Dispositif d'attelage extensible pour véhicules routiers, comportant un vérin hydraulique à double effet (24), dont la tige (28) est reliée au moyen d'accrochage réalisant l'attelage d'un deuxième véhicule à un premier véhicule, en particulier à un véhicule tracteur, et dont le corps est relié à la structure dudit deuxième véhicule, ainsi qu'un circuit hydraulique comportant des canalisations reliées à chacune des chambres du vérin à double effet (24) et des organes de commande permettant de déplacer le piston (35) dudit vérin et de faire ainsi varier la distance séparant les deux véhicules, caractérisé par le fait qu'il comporte des moyens de détection à distance (7) capables d'émettre un signal témoignant de la position relative entre les deux véhicules à l'aide d'une cible (8) portée par l'un desdits véhicules, ainsi qu'une unité centrale de commande (62) reliée auxdits organes de détection à distance et auxdits organes de commande du circuit hydraulique pour déclencher automatiquement l'allongement ou la rétraction du vérin à double effet (24) en fonction de la position relative des véhicules, ledit circuit hydraulique comportant également des moyens de commande de sécurité déclenchant l'allongement dudit vérin en cas de panne totale ou partielle grâce à un accumulateur hydropneumatique (60).

2. Dispositif d'attelage selon la revendication 1, caractérisé par le fait que les moyens de détection à distance (7) comportent un ensemble émetteur-récepteur (9) monté sur le premier véhicule en arrière de celui-ci, et une cible (8) montée sur le deuxième véhicule en avant de celui-ci, ledit émetteur-récepteur formant un mini-faisceau hertzien ou infra-rouge dirigé vers ladite cible.

3. Dispositif d'attelage selon les revendications 1 et 2, caractérisé par le fait que l'unité centrale de commande (62) permet de déclencher automatiquement l'allongement du vérin à double effet (24) lorsque la cible (8) sort du mini-faisceau hertzien ou infra-rouge, en comparant le signal émis à un seuil prédéterminé.

4. Dispositif d'attelage selon la revendication 3, caractérisé par le fait que l'unité centrale de commande (62) comporte un moyen de temporisation agissant sur les moyens de commande de sécurité, de façon à déclencher automatiquement l'allongement du vérin à double effet (24) si cet allongement ne s'est pas produit dans un bref intervalle de temps suivant le moment où le seuil prédéterminé a été atteint.

5. Dispositif d'attelage selon l'une des revendications 1 à 4, caractérisé par le fait qu'il comporte des moyens de détection à distance (7) pour chaque articulation des véhicules attelés.

6. Dispositif d'attelage selon la revendication 5, dans lequel le premier véhicule est un véhicule tracteur (1) et le deuxième véhicule une remorque à essieux centraux (2), caractérisé par le fait qu'il comporte un système unique (7) à émetteur-récepteur (9) et cible (8) pour déclencher l'allongement ou la rétraction du vérin à double effet (24) dont le corps (36) est fixé dans une flèche (3) solidaire du châssis de la remorque.

7. Dispositif d'attelage selon la revendication 5, dans lequel le premier véhicule est un véhicule tracteur (1), et le deuxième véhicule une remorque (14) à avant-train articulé (15), caractérisé par le fait qu'il comporte un double système (7) à émetteur-récepteur (9) et cible (8), entre le véhicule tracteur (1) et l'avant-train (15) d'une part et entre l'avant-train (15) et le châssis de la remorque (14) d'autre part, pour déclencher l'allongement ou la rétraction du vérin à double effet (24) dont le corps (36) est fixé dans une flèche triangulée (17) reliée à l'avant-train articulé (15).

8. Dispositif d'attelage selon l'une des revendications 6 et 7, caractérisé par le fait que la tige du vérin à double effet (24) est reliée à un tube de glissière (4) coulissant dans la flèche d'attelage (3, 17), et dont l'avant porte un anneau d'attelage conventionnel (5).

9. Dispositif d'attelage selon la revendication 7, caractérisé par le fait que le double système émetteur-récepteur (9) et cible (8) est relié à l'unité centrale de commande (62) de telle façon que le déclenchement de l'allongement ou de la rétraction puisse être séquentiel.

10. Dispositif d'attelage selon la revendication 5, dans lequel le premier véhicule est un véhicule tracteur (11) et le deuxième véhicule une semi-remorque (12), caractérisé par le fait qu'il comporte un système unique (7) à émetteur-récepteur (9) et cible (8) pour déclencher l'allongement ou la rétraction du vérin à double effet (24) dont le corps est relié au châssis de la semi-remorque, et dont la tige est articulée sur un chariot coulissant (22) portant la cheville d'attelage (23).

11. Dispositif d'attelage selon les revendications 5, 7, 10, dans lequel une remorque (18) à avant-train à sellette (20) est attelée à un véhicule tracteur à semi-remorque (11, 12), caractérisé par le fait qu'il comporte un triple système (7) à émetteur-récepteur (9) et cible (8), dont l'un constitue ledit système unique associé au vérin à double effet (24) reliant le véhicule tracteur (11) à la semi-remorque (12), et dont les deux autres constituent le double système (7) associé au vérin à double effet (24) reliant la semi-remorque (12) à l'avant-train (20) de la remorque.

12. Dispositif d'attelage selon les revendications 1 à 4, et l'une des revendications 6, 7 et 11, caractérisé par le fait que le vérin à double effet (24) monté dans la flèche d'attelage (3, 17, 21) a deux positions de rétraction, la première étant déclenchée automatiquement grâce aux moyens de détection et correspondant à un intervalle minimum donné entre les véhicules, par exemple 100 mm, la seconde étant déclenchée à l'arrêt par des moyens interrupteurs associés et correspondant à un intervalle nul entre les véhicules de façon à former un ensemble continu de chargement ou déchargement.

13. Dispositif d'attelage selon l'une des revendications 1 à 12, caractérisé par le fait que les organes de commande comportent deux ensembles d'électro-valves (53, 54, 55, 56) connectant l'une ou l'autre des chambres du vérin à double effet (24) soit avec une pompe hydraulique (49) soit avec un réservoir de fluide hydraulique (50).

14. Dispositif d'attelage selon l'une des revendications 1 à 12, caractérisé par le fait que les organes de commande comportent un électro-distributeur (71) et une électro-valve (72) connectant une chambre du vérin à double effet (24) soit avec une pompe hydraulique (49) soit avec un réservoir de fluide hydraulique (50), l'autre chambre étant quant à elle seulement raccordée à l'accummulateur hydropneumatique de sécurité (60).

15. Dispositif d'attelage selon l'une des revendications 13 et 14, caractérisé par le fait que la pompe hydraulique (49) est actionnée par une prise de mouvement du moteur ou de la boîte de vitesses, par l'intermédiaire d'un embrayage (51) commandé par l'unité centrale de commande (62).

16. Dispositif d'attelage selon l'une des revendications 1 à 12, caractérisé par le fait que les organes de commande comportent une première électro-valve (74), et un ensemble de deux électro-valves (75, 76) avec un étrangleur fluidique (79), connectant une chambre du vérin à double effet (24) soit avec une pompe hydraulique (49) soit avec un réservoir de fluide hydraulique (50), l'autre chambre étant quant à elle seulement raccordée à l'accumulateur hydropneumatique de sécurité (60).

17. Dispositif d'attelage selon la revendication 16, caractérisé par le fait que les deux électro-valves (75, 76), auxquelles est associé l'étrangleur fluidique (79), sont montées en parallèle, et actionnées séquentiellement par l'unité centrale de commande (62) lors du déclenchement de l'allongement du vérin à double effet (24), de façon à maîtriser l'accélération du fluide résultant de la poussée permanente de l'accumulateur hydropneumatique (60).

18. Dispositif d'attelage selon l'une des revendications 1 à 17, caractérisé par le fait que des capteurs (63, 64) sont prévus pour détecter l'état d'allongement ou de rétraction du vérin à double effet (24), lesdits capteurs étant reliés à l'unité centrale de commande (62).

## Patentansprüche

1. Ausziehbare Anhängerkupplung für Straßenfahrzeuge mit einem hydraulischen Doppeleffektzylinder (24), dessen Schaft mit einer Anhängevorrichtung verbunden ist, die das Anhängen eines zweiten Fahrzeugs an das erste Fahrzeug, insbesondere an ein Zugfahrzeug, bewirkt, und dessen Körper mit der Struktur des zweiten Fahrzeugs verbunden ist; mit einem Hydraulikkreis, der Kanäle aufweist, die mit jeder der Kammern des Doppeleffektzylinders (24) verbunden sind; und mit Steuerelementen, die erlauben, den Kolben (35) des Zylinders zu verschieben und so den Abstand, der die beiden Fahrzeugs trennt, zu variieren, gekennzeichnet durch die Tatsache, daß sie eine Vorrichtung (7) zum Ferndetektieren, die in der Lage ist, ein Signal hinsichtlich der relativen Position zwischen den beiden Fahrzeugen mit Hilfe eines Ortungsobjektes (8), das von einem der Fahrzeuge getragen wird, abzugeben, sowie eine zentrale Steuereinheit (62) aufweist, die mit den Ferndetektionselementen und den Steuerelementen des Hydraulikkreises verbunden sind, um automatisch die Verlängerung oder Verkürzung des Doppeleffektzylinders (24) in Abhängigkeit von der relativen Position der Fahrzeuge zu bewirken, wobei der Hydraulikkreis ebenfalls Sicherheitsteuerelemente aufweist, die die Verlängerung des Zylinders im Falle einer völligen oder teilweisen Panne Dank eines hydropneumatischen Akkumulators (60) bewirkt.

2. Anhängerkupplung nach Anspruch 1, gekennzeichnet durch die Tatsache, daß die Ferndetektionsvorrichtung (7) eine Sender-Empfängergruppe (9), die hinten auf dem ersten Fahrzeug montiert ist, und ein Ortungsobjekt (8), das vorne auf dem hinteren Fahrzeug montiert ist, umfaßt, wobei der Sender-Empfänger einen Minirichtstrahl oder Infrarotstrahl bildet, der auf das Ortungsobjekt gerichtet ist.

3. Anhängerkupplung nach Ansprüchen 1 und 2, gekennzeichnet durch die Tatsache, daß die zentrale Steuereinheit (62) ermöglicht, automatisch eine Verlängerung des Doppeleffektzylinders (24) auszulösen, wenn sich das Ortungsobjekt (8) aus dem Minirichtstrahl oder Infrarotstrahl entfernt, indem sie die ausgesendeten Signale mit einer vorgegebenen Schwelle vergleicht.

4. Anhängerkupplung nach Anspruch 3, gekennzeichnet durch die Tatsache, daß die zentrale Steuereinheit (62) eine Verzögerungsvorrichtung aufweist, die auf die Sicherheitssteuervorrichtung derart wirkt, daß sie automatisch eine Verlängerung des Doppeleffektzylinders (24) bewirkt, wenn diese Verlängerung nicht innerhalb eines kurzen Zeitintervalls nach dem Moment, in dem die vorgegebene Schwelle erreicht ist, erzeugt ist.

5. Anhängerkupplung nach den Ansprüchen 1 bis 4, gekennzeichnet durch die Tatsache, daß sie Ferndetektiervorrichtungen (7) für jedes Gelenk von angehängten Fahrzeugen aufweist.

6. Anhängerkupplung nach Anspruch 5, wobei das erste Fahrzeug ein Zugfahrzeug (1) ist und das zweite Fahrzeug ein Anhänger (2) mit zentralen Achsen ist, gekennzeichnet durch die Tatsache, daß sie ein einziges System (7) mit einem Sende-Empfänger (9) und einem Ortungsobjekt (8) zur Verlängerung oder Verkürzung des Doppeleffektzylinders (24) umfaßt, dessen Körper (36) in einer festen Zuggabel (3) des Rahmens des Anhängers befestigt ist.

7. Anhängerkupplung nach Anspruch 5, wobei das erste Fahrzeug ein Zugfahrzeug (1) ist und das zweite Fahrzeug ein Anhänger (14) mit einem Deichsel-Lenkgestell (15) ist, gekennzeichnet durch die Tatsache, daß sie ein zweifaches System (7) mit Sende-Empfänger (9) und Ortungsobjekt (8) zwischen dem Zugfahrzeug (1) und der Deichsel (15) auf der einen Seite und zwischen der Deichsel (15) und dem Rahmen des Anhängers (14) auf der anderen Seite aufweist, um die Verlängerung oder das Zusammenziehen des Doppeleffektzylinders (24), dessen Körper (36) in einer dreieckigen, mit dem Deichsel-Drehgestell (15) verbundenen Zuggabel (17) befestigt ist, zu bewirken.

8. Anhängerkupplung nach einem der Ansprüche 6 und 7, gekennzeichnet durch die Tatsache, daß der Schaft des Doppeleffektzylinders (24) mit einem Gleitrohr (4) verbunden ist, das in der Anhängezuggabel (3, 17) gleitet und dessen Vorderseite einen herkömmlichen Anhängering (5) trägt.

9. Anhängerkupplung nach Anspruch 7, gekennzeichnet durch die Tatsache, daß das doppelte System aus Sende-Empfänger (9) und Ortungsobjekt (8) mit der zentralen Steuereinheit (62) derart verbunden ist, daß das Auslösen der Verlängerung oder des Zusammenziehens sequentiell sein kann.

10. Anhängerkupplung nach Anspruch 5, wobei das erste Fahrzeug ein Zugfahrzeug (11) ist und das zweite Fahrzeug ein Sattelanhänger (12) ist, gekennzeichnet durch die Tatsache, daß sie ein einziges System (7) aus Sende-Empfänger (9) und Ortungsobjekt (8) aufweist, um die Verlängerung oder das Zusammenziehen des Doppeleffektzylinders (24), dessen Körper mit dem Rahmen des Sattelanhängers verbunden ist und dessen Schaft gelenkig auf einem Gleitschlitten (22), der den Hauptkuppelbolzen (23) trägt, befestigt ist, auszulösen.

11. Anhängerkupplung nach den Ansprüchen 5, 7 und 10, wobei ein Anhänger (18) mit einer Deichsel mit Achsschemel (20) an ein Zugfahrzeug mit Sattelauflieger (11, 12) angehängt ist, gekennzeichnet durch die Tatsache, dass sie ein dreifaches System (7) aus Sende-Empfänger (9) und Ortungsobjekt (8) aufweist, von dem eines das einzige, mit einem Doppeleffektzylinder (24) verbundene System darstellt, das das Zugfahrzeug (11) mit dem Sattelanhänger (12) verbindet, und von dem die beiden anderen das zweifache, mit einem Doppeleffektzylinder (24) verbundene System (7) darstellen, das den Sattelanhänger (12) mit der Deichsel (20) des Anhängers verbindet.

12. Anhängerkupplung nach den Ansprüchen 1 bis 4 und einem der Ansprüche 6, 7 und 11, gekennzeichnet durch die Tatsache, daß der Doppeleffektzylinder (24) mit zwei Zusammenzugpositionen in die Zuggabel (3, 17, 21) befestigt ist, wobei die erste Position dank der Detektiervorrichtung automatisch ausgelöst wird und einem vorgegebenen, minimalen Abstand zwischen den Fahrzeugen entspricht, zum Beispiel 100 mm, und die zweite Position durch das Anhalten der Unterbrechungsvorrichtung ausgelöst wird und einem verschwindenden Abstand zwischen den Fahrzeugen entspricht, so daß eine kontinuierliche Lade- und Entladeeinheit gebildet wird.

13. Anhängerkupplung nach einem der Ansprüche 1 bis 12, gekennzeichnet durch die Tatsache, daß die Steuerelemente zwei Gruppen von Elektroventilen (53, 54, 55, 56) aufweisen, die die eine oder die andere der Kammern des Doppeleffektzylinders (24) entweder mit einer Hydraulikpumpe (49) oder mit einem Hydraulikflüssigkeitsreservoir (50) verbinden.

14. Anhängerkupplung nach einem der Ansprüche 1 bis 12, gekennzeichnet durch die Tatsache, daß die Steuerelemente einen Elektroverteiler (71) und ein Elektroventil (72) aufweisen, die eine Kammer des Doppeleffektzylinders (24) mit einer Hydraulikpumpe (49) oder mit einem Hydraulikflüssigkeitsreservoir (50) verbinden, wobei die andere Kammer mit dem hydropneumatischen Sicherheitsspeicher (60) verbunden ist.

15. Anhängerkupplung nach einem der Ansprüche 13 und 14, gekennzeichnet durch die Tatsache, daß die Hydraulikpumpe (49) durch einen Abgriff der Motorbewegung oder des Getriebes über eine von der zentralen Steuereinheit (62) gesteuerte Kupplung (51) betrieben wird.

16. Anhängerkupplung nach einem der Ansprüche 1 bis 12, gekennzeichnet durch die Tatsache, daß die Steuerelemente ein erstes (74) und eine Gruppe von zwei Elektroventilen (75, 76) mit einer Fluiddrosselklappe (79) aufweisen, die eine Kammer des Doppeleffektzylinders (24) entweder mit einer hydraulischen Pumpe (49) oder mit einem Hydraulikflüssigkeitsreservoir (50) verbindet, wobei die andere Kammer mit dem hydropneumatischen Sicherheitsspeicher (60) verbunden ist.

17. Anhängerkupplung nach Anspruch 16, gekennzeichnet durch die Tatsache, daß die beiden Elektroventile (75, 76), mit denen die Fluiddrosselklappe (79) verbunden ist, parallel montiert sind und nacheinander von der zentralen Steuereinheit (62) beim Auslösen der Verlängerung des Doppeleffektzylinders (24) so betätigt werden, daß die aus dem permanenten Druck des hydropneumatischen Speichers (60) resultierende Beschleunigung des Fluids gemeistert wird.

18. Anhängerkupplung nach einem der Ansprüche 1 bis 17, gekennzeichnet durch die Tatsache, daß Aufnehmer (63, 64) vorgesehen sind, um den Zustand der Verlängerung oder des Zusammenziehens des Doppeleffektzylinders (24) zu überprüfen, wobei die Aufnehmer mit der zentralen Steuereinheit (62) verbunden sind.

**Claims**

1. Extensible tow coupling for road vehicles, comprising a double-acting hydraulic jack (24), whereof the rod (28) is connected to the hitch means achieving the coupling of a second vehicle to a first vehicle, in particular to a pulling vehicle and whereof the body is connected to the structure of said second vehicle, as well as a hydraulic circuit comprising lines connected to each of the chambers of the double-acting jack (24) and of the control members making it possible to move the piston (35) of said jack and thus to vary the distance separating the two vehicles, characterised by the fact that it comprises distance detection means (7) capable of emitting a signal indicating the relative position between the two vehicles by means of a target (8) carried by one of said vehicles, as well as a central control unit (62) connected to the said distance detection members and to the said control members of the hydraulic circuit for automatically initiating the extension or retraction of the double-acting jack (24) depending on the relative position of the vehicles, the said hydraulic circuit also comprising safety control means initiating the extension of said jack in the case of complete or partial breakdown by virtue of a hydropneumatic accumulator (60).

2. Tow coupling according to Claim 1, characterised by the fact that the distance detection means (7) comprise a transmitter/receiver arrangement (9) mounted on the first vehicle at the rear of the latter and a target (8) mounted on the second vehicle at the front of the latter, said transmitter/receiver forming a Hertzian or infrared mini-beam directed towards said target.

3. Tow coupling according to Claims 1 and 2, characterised by the fact that the central control unit (62) makes it possible to automatically initiate the extension of the double-acting jack (24) when the target (8) leaves the Hertzian or infrared mini-beam, by comparing the signal emitted with a predetermined threshold.

4. Tow coupling according to Claim 3, characterised by the fact that the central control unit (62) comprises delay means acting on the safety control means, in order to automatically initiate the extension of the doubleacting jack (24) if this extension has not occurred in a brief interval of time following the instant when the predetermined threshold has been reached.

5. Tow coupling according to one of Claims 1 to 4, characterised by the fact that it comprises distance detection means (7) for each articulation of the coupled vehicles.

6. Tow coupling according to Claim 5, in which the first vehicle is a pulling vehicle (1) and the second vehicle is a trailer with central axles (2), characterised by the fact that it comprises a single system (7) comprising a transmitter/receiver (9) and target (8) for initiating the extension or retraction of the double-acting jack (24), whereof the body (36) is fixed in a tow bar (3) integral with the chassis of the trailer.

7. Tow coupling according to Claim 5, in which the first vehicle is a pulling vehicle (1) and the second vehicle a trailer (14) having an articulated fore-carriage (15), characterised by the fact that it comprises a double system (7) comprising a transmitter/receiver (9) and target (8), between the pulling vehicle (1) and the fore-carriage (15) on the one hand and between the fore-carriage (15) and the chassis of the trailer (14) on the other hand, in order to initiate the extension or retraction of the double-acting jack (24) whereof the body (36) is fixed in a triangulated tow bar (17) connected to the articulated fore-carriage (15).

8. Tow coupling according to one of Claims 6 and 7, characterised by the fact that the rod of the double-acting jack (24) is connected to a slide tube (4) sliding in the tow bar (3, 17) and whereof the front supports a conventional coupling ring (5).

9. Tow coupling according to Claim 7, characterised by the fact that the double system comprising transmitter/receiver (9) and target (8) is connected to the central control unit (62) such that the initiation of the extension or retraction can be sequential.

10. Tow coupling according to Claim 5, in which the first vehicle is a pulling vehicle (11) and the second vehicle is a semi-trailer (12), characterised by the fact that it comprises a single system (7) comprising a transmitter/receiver (9) and target (8) for initiating the extension or retraction of the double-acting jack (24), whereof the body is connected to the chassis of the semi-trailer and whereof the rod is articulated on a sliding carriage (22) supporting the coupling-pin (23).

11. Tow coupling according to Claims 5, 7, 10, in which a trailer (18) with a fore-carriage having an axle-tree (20) is coupled to a pulling vehicle with a semi-trailer (11, 12), characterised by the fact that it comprises a triple system (7) comprising a transmitter/receiver (9) and target (8), whereof one constitutes said single system associated with the double-acting jack (24) connecting the pulling vehicle (11) to the semi-trailer (12) and whereof the other two constitute the double system (7) associated with the double-acting jack (24) connecting the semi-trailer (12) to the fore-carriage (20) of the trailer.

12. Tow coupling according to Claims 1 to 4 and one of Claims 6, 7 and 11, characterised by the fact that the double-acting jack (24) mounted in the tow bar (3, 17, 21) has two retraction positions, the first being initiated automatically by virtue of the detection means and corresponding to a given minimum gap between the vehicles, for example 100 mm, the second being initiated at the time of stoppage by associated switch means and corresponding to a zero gap between the vehicles in order to form a continuous loading or unloading arrangement.

13. Tow coupling according to one of Claims 1 to 12, characterised by the fact that the control members comprise two electro-valve assemblies (53, 54, 55, 56) connecting one or other of the chambers of the double-acting jack (24) either to a hydraulic pump (49) or to a reservoir of hydraulic fluid (50).

14. Tow coupling according to one of Claims 1 to 12, characterised by the fact that the control members comprise an electro-distributor (71) and an electro-valve (72) connecting one chamber of the double-acting jack (24) either to a hydraulic pump (49) or to a reservoir of hydraulic fluid (50), the other chamber in turn being solely connected to the hydropneumatic safety accumulator (60).

15. Tow coupling according to one of Claims 13 and 14, characterised by the fact that the hydraulic pump (49) is actuated by a movement take-off from the engine or gear box, through the intermediary of a clutch (51) controlled by the central control unit (62).

16. Tow coupling according to one of Claims 1 to 12, characterised by the fact that the control members comprise a first electro-valve (74) and an arrangement of two electrovalves (75, 76) with a fluid throttling device (79), connecting one chamber of the double-acting jack (24) either to a hydraulic pump (49) or to a reservoir of hydraulic fluid (50), the other chamber in turn being solely connected to the hydropneumatic safety accumulator (60).

17. Tow coupling according to Claim 16, characterised by the fact that the two electro-valves (75, 76), with which the fluid throttling device (79) is associated, are connected in parallel and actuated sequentially by the central control unit (62) at the time of initiation of the extension of the double-acting jack (24), in order to control the acceleration of the fluid resulting from the permanent thrust of the hydropneumatic accumulator (60).

18. Tow coupling according to one of Claims 1 to 17, characterised by the fact that sensors (63, 64) are provided for detecting the state of extension or retraction of the double-acting jack (24), the said sensors being connected to the central control unit (62).

FIG.1

FIG.2

FIG.3

FIG.4

FIG.5a

1

2

7

6 5 4 9 3 8 10

FIG.5b

1

8

3

2

6 5 4 9

7 10

EP 0 264 321 B1

FIG.6a

FIG.6b

EP 0 264 321 B1

FIG.7

FIG.8

FIG.9

# FIG_10

EP 0 264 321 B1

FIG_11

EP 0 264 321 B1

# FIG.12

FIG.13

EP 0 264 321 B1

FIG.14

EP 0 264 321 B1

FIG.15

EP 0 264 321 B1